# EUROPEAN PATENT APPLICATION

(11) **EP 0 969 624 A2**
(43) Date of publication of application: **05.01.2000**
(21) Application number: 99112332.4
(22) Date of filing: 26.06.1999
(51) Int. Cl.: H04L 1/24, H04L 1/16

(54) **Method for monitoring the quality of a transmission channel and a digital receiver**

(30) Priority: 01.07.1998 FI 981514
(71) Applicant: NOKIA TECHNOLOGY GmbH, 75175 Pforzheim (DE)
(72) Inventor: Talmola, Pekka, 20240 Turku (FI)

(57) **Abstract**

The invention pertains to a method for monitoring the quality of a transmission channel in a digital system, wherein a signal is received from a transmission network (12), various data related to the operation of the transmission channel are measured from the received signal, said data are stored in the memory (25) of the receiver unit (20) and the data stored in the memory (25) are transferred through a return channel (27) to a transmission center. In addition, the invention pertains to a digital receiver (20) comprising means (21, 22) for measuring data related to the operation of a transmission channel from a received signal and means (24) for storing the data related to the operation of a transmission channel in a memory (25) and transferring the data stored in the memory (25) through a return channel (27) to a transmission center (11).

## Description

The invention relates to a method according to the preamble of claim 1 for monitoring the quality of a transmission channel in digital systems. The invention also relates to a digital receiver according to claim 10.

The amounts of information transmitted are rapidly growing in the modern information society. More and more often information is transmitted in large systems which have at least one transmission center to transmit information through a transmission network to at least one receiver. In practice, tens of thousands receivers can be connected to a section of a transmission network handled by one transmission center. Such systems include e.g. digital cable TV network systems.

As regards management and maintenance of systems like the ones described above, it is often advantageous to know the quality of the transmission channel between the transmission center and receiver, i.e. the section of the transmission network through which the signal sent from the transmission center travels to the receiver. Especially important it is in cases of disturbances and problems where the information received does not meet the expectations and one wants to find out the cause of the problem.

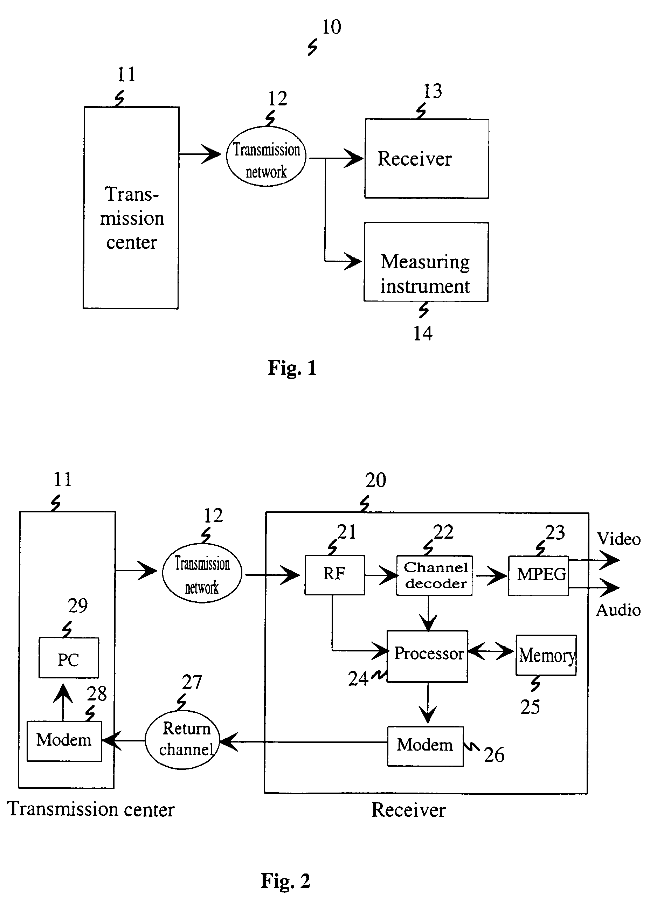

It is known from the prior art several different solutions for monitoring the transmission channel quality. Fig. 1 shows a prior-art solution 10 in which a signal transmitted from a transmission center 11 via a transmission network 12 to a receiver 13 is examined by means of a separate measuring instrument 14 connected in parallel with the receiver 13. The measuring instrument 14 can be used to calculate from the received signal various parameters representing the quality of the transmission channel. Certain prior-art instruments cannot calculate the desired transmission channel quality criteria from the signal normally transmitted through the transmission network 12 and therefore require that a separate measurement signal be transmitted to the transmission network 12. Such solutions waste at least part of the transmission capacity which is important from the system operator's standpoint and which is then not available to the transmission of the signal proper, such as a TV program, which is not desirable.

The above-described solution based on a separate measuring instrument 14 typically requires a skilled person to use the instrument 14. More advanced receivers are equipped with an in-built measuring logic which the user can employ by means of remote control or from the front panel of the apparatus. With the measuring logic the user is able to carry out certain measurements and display the measurement results on the TV screen, for example.

A problem with the prior-art arrangements described above is the work they require. More complex separate measuring instruments require in practice a skilled person to carry out the measurements, and receivers based on in-built measurement logic means require active participation by the user in order to produce measurement values. Furthermore, prior-art solutions do not disclose how the measured data should be transferred to the transmission center.

An object of this invention is to provide a method and an apparatus by means of which the monitoring of transmission channel quality can be realized in a simpler fashion than in prior-art solutions and without separate equipment or user participation. These objects are achieved by transferring the results describing the transmission channel quality, measured from the received signal, via a return channel, such as telephone network, to the transmission center.

More specifically, the method according to the invention is characterized by what is expressed in the characterizing part of claim 1. The apparatus according to the invention is characterized by what is expressed in the characterizing part of claim 10. Preferred embodiments of the invention are presented in the dependent claims.

By means of the invention it is possible to realize the monitoring of the quality of a transmission channel in a manner that requires no participation from the user's part as all measurements and the transfer of measurement results to a transmission center can be automated and controlled from the transmission center, if necessary.

In addition, the apparatus according to the invention can be realized using components already present in a typical receiver so that no separate measuring means are needed.

Furthermore, the solution according to the invention needs no separate measuring signal but the necessary measurements can be made from normal signals traveling in the transmission network. This way, one avoids wasting the transmission capacity of the transmission network on maintenance or troubleshooting.

The invention will now be described in more detail with reference to the accompanying drawing wherein
- Fig. 1: shows an arrangement according to the prior art for monitoring the quality of a transmission channel,
- Fig. 2: shows an apparatus according to the invention for monitoring the quality of a transmission channel, and
- Fig. 3: shows a flow diagram of a method according to the invention for monitoring the quality of a transmission channel.

Fig. 1 was explained above in connection with the description of the prior art.

Fig. 2 shows the construction of a digital receiver 20 according to the invention. The basic construction as such is known from existing digital receivers. The receiver 20 comprises a RF part 21 for receiving a signal sent from a transmission center 11 via a transmission network 12, a decoding part 22 for decoding the desired information in the received signal, and a final processing part 23 for converting the decoded information to a format suitable for the end application. In digital TV receiver equipment, for example, the final processing part 23 may be a video and audio decoder according to the MPEG standard.

In a typical digital receiver, a microprocessor 24 controls the operation of the various parts in the receiver 20 in accordance with a program stored in memory 25. The digital receiver further comprises a modem 26 for conveying user selections via a return channel, such as a telephone network, to a desired destination e.g. to order a product presented in a TV commercial.

An embodiment of the solution according to the invention utilizes the RF part 21, decoding part 22, microprocessor 24, memory 25 and modem 26 belonging to the aforementioned typical digital receiver. A signal from the transmission network 12 is received in the RF part 21 whereby the microprocessor 24 can be programmed so as to perform measurements in a known manner in the RF part 21 e.g. on the channel frequency or signal level. These measurements may utilize the automatic gain control (AGC) voltage, for example. Measured data can be stored in memory 25 advantageously together with a time code, such as time of day, indicating the time of the measurement, to be later transferred, at a suitable moment, through a modem 26, return channel 27 and a modem 28 in the transmission center 11, to the transmission center 11. By means of a computer 29 connected to the transmission center 11 it is then possible to examine the results of the measurements carried out in the digital receiver 20, store them for later analysis or use them to make deductions concerning the quality of the transmission channel between the transmission center 11 and the receiver 20 and, if necessary, take action, as required, to improve the quality of the transmission channel.

The solution according to the invention is not limited to the use of the RF part 21 to carry out the measurements on the transmission channel quality. Similarly, various known measurements related to channel quality can be performed in the decoding part 22. For example, in connection with error correction carried out in the decoding part 22 it is possible to calculate the bit error rate (BER) or the number of errors that got through, which directly indicate the quality of the information transmitted and, thus, the quality of the transmission channel used. Furthermore, in receivers receiving a quadrature-amplitude modulated (QAM) signal, for example, it is possible to read the equalizer tap data by means of which it is possible to calculate in a known manner the channel response. Similarly, in terrestrial receivers according to the COFDM (Coded Orthogonal Frequency Division Multiplex) standard it is possible to read a channel estimate by means of which it is possible to directly determine the channel response. Measured information related to the quality of the transmission channel or the algorithms related to the measurement of said information are not essential as regards the present information and they can be freely specified so as to be optimal for each application.

It is advantageous to choose the calculation algorithms such that the measurements can be directed to the signal normally traveling in the transmission network 12, so that no separate measuring signal is needed. This way, measurements can be carried out without disturbing the normal information flow in the transmission network.

An essential feature, as regards the invention, is that the measurement results are transferred through the return channel of the receiver 20 to the transmission center 11. The transfer may occur at predetermined intervals or when one of the measured values goes below a certain predetermined threshold.

A communications connection between the transmission center 11 and receiver 20 can be realized e.g. such that the modem 26 in the receiver 20 calls the transmission center 11 or, if the modem 26 in the receiver 20 is advantageously connected to a return channel of its own, the modem 28 in the transmission center can call the modem 26 in the receiver 20 through the return channel 27. Furthermore, the connection establishment command may be conveyed e.g. by means of a signal sent via the transmission network 12, and when the receiver 20 has received said command it calls the transmission center 11 through the return channel 27.

Measurement data stored in the memory is advantageously read so often that the memory 25 available is sufficient for storing the measurement results gathered between the reads. Thus, the read interval should be set according to the storage capacity required by the measurement results and the memory 25 available.

Since the solution according to the invention is based on the use of means normally included in a typical receiver, the solution can be realized by means of software changes only, without having to install extra components in the receiver unit 20. To provide for the expansion of software used and the need to reserve storage capacity for saving the measurement results it is possible to add memory 25 to the apparatus 20 according to the invention so that it has more memory than a conventional receiver. Addition of memory 25 is, however, a fairly simple and advantageous operation in comparison with the benefits related to the solution according to the invention. On the other hand, additional memory is not required in the solutions described below, in which the measurement results are sent directly to the return channel, without being first stored in memory.

Using the solution according to the invention, transmission channel monitoring can be realized also such that a connection is established between the transmission center 11 and receiver 20 by means of modems 28 and 26 via the return channel 27 in such a manner that the measurements can be controlled from the transmission center 11. This facilitates more efficient measurement management, as the operator at the transmission center can alter measurements according to need or, if necessary, control the measurements in real time, in which case the measured data need not be stored in memory but they can be sent directly through the return channel 27 to the transmission center 11. Similarly, a command can be sent from the transmission center through the transmission network 12 to the receiver ordering a given measurement and immediate transfer of the measurement result via the return channel 27 to the transmission center 11.

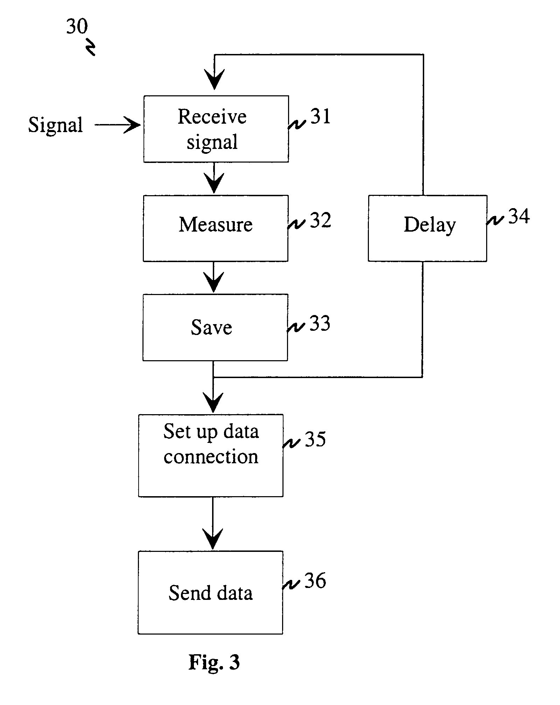

Fig. 3 shows an embodiment 30 of the method according to the invention in which a signal sent from a transmission center is in the first stage 31 received through a transmission network. In the second stage 32, possibly several different measurements are performed on the received signal to calculate parameters related to the quality of the transmission channel between the transmission center and the receiver. In the third stage 33 of the method, the data gathered in the second stage 32 are stored advantageously together with a time code, such as time of day, indicating the time of the measurement, in the receiver's memory. As stated above, storing of the measurement results is not necessary but the operator may make the measurements through a connection via the return channel 27, or the measurement results may be sent directly through the return channel 27 to the transmission center without being stored in memory. In the fourth stage 34 of the method the measurement is followed by a delay, whereafter the process returns to the first stage 31 in order to make a new measurement.

After a predetermined time of measurement data gathering or when other possible criteria are met the method sets up in its fifth stage 35 a connection between the receiver and the transmission center though a return channel 27, such as a telephone network. In the sixth stage 36 of the method the measurement results are transferred through a modem in the receiver to the transmission center 11 via the return channel 27.

The solution according to the invention is not limited to the examples described above but may be modified within the scope defined by the claims set forth below.

## Claims

1. A method (30) for monitoring the quality of a transmission channel in a digital system, wherein
- a signal is received (31) from a transmission network,
- various data related to the operation of the transmission channel are measured (32) from the signal received,
**characterized** in that
- said data are transferred (36) through a return channel to a transmission center.

2. The method (30) of claim 1, **characterized** in that the receiver establishes (35) a connection between the receiver and transmission center on the basis of a command included in a signal received (31) from the transmission network.

3. The method (30) of claim 1, **characterized** in that said data related to the operation of the transmission channel are measured (32) from a signal normally traveling in the transmission network.

4. The method (30) of claim 1, **characterized** in that said system is a digital TV system.

5. The method (30) of claim 1, **characterized** in that the return channel is a telephone network.

6. The method (30) of claim 1, **characterized** in that said data are stored (33) in the memory of the receiver unit.

7. The method (30) of claim 6, **characterized** in that the stored data are transferred (35) to the transmission center at certain predetermined intervals through a return channel.

8. The method (30) of claim 6, **characterized** in that a code indicating the time of the measurement is stored (30) in the memory together with said data to be transferred to the transmission center.

9. The method (30) of claim 1 or 6, **characterized** in that said data related to the operation of the transmission channel are measured (32), sent (36) to the return channel and, if necessary, stored (33) using the same receiver unit that is used for decoding information received normally from the transmission network.

10. A digital receiver (20) comprising means (21, 22) for measuring data related to the operation of a transmission channel from a received signal and a modem (26) or the like, **characterized** in that the apparatus (20) comprises means for transferring the measured data through a modem (26) or the like to a transmission center (11) via a return channel (27).

11. The digital receiver (20) of claim 10 which comprises a memory (25), **characterized** in that the apparatus (20) comprises means (24) for storing the data related to the operation of a transmission channel in the memory (25).

12. The digital receiver (20) of claim 11, **characterized** in that the receiver (20) comprises means (24) for storing a time code indicating the time of each measurement in the memory (25) and means (24) for transferring said time code to a transmission center (11).

13. The digital receiver (20) of any one of claims 10 to 12, **characterized** in that at least some of said means (21, 22, 24, 25) are the same as the means used for decoding the received signal proper.

14. The digital receiver (20) of claim 10, **characterized** in that the receiver (20) is a digital TV receiver.

15. The digital receiver (20) of claim 10, **characterized** in that the return channel (27) is a telephone network.
